# EUROPÄISCHE PATENTSCHRIFT

(11) **EP 2 761 194 B1**
(45) Veröffentlichungstag und Bekanntmachung des Hinweises auf die Patenterteilung: **09.11.2016**
(21) Anmeldenummer: 12762278.5
(22) Anmeldetag: 20.09.2012
(51) Int. Cl.: F16C 3/02, F16C 13/00, F16D 1/033, B30B 3/00, B02C 4/28

(54) **WELLE MIT FLANSCHVERBINDUNG**
SHAFT WITH FLANGE CONNECTION
ARBRE AVEC LIAISON A BRIDE

(30) Priorität: 28.09.2011 DE 202011106443 U
(43) Veröffentlichungstag der Anmeldung: 06.08.2014
(73) Patentinhaber: KHD Humboldt Wedag GmbH, 51067 Köln (DE)
(72) Erfinder: FRANGENBERG, Meinhard, 51515 Kürten (DE)
(86) Internationale Anmeldenummer: PCT/EP2012/068500
(87) Internationale Veröffentlichungsnummer: WO 2013/045334

(56) Entgegenhaltungen:
- DE-A1- 3 639 586
- GB-A- 1 151 208
- US-A- 4 080 704

## Beschreibung

Die Erfindung betrifft eine Flanschverbindung auf einer Welle, die es ermöglicht, Maschinenteile auf der Welle schnell und einfach auszutauschen, ohne dass der Flansch dabei entfernt werden muss. Eine derartige, als Maschinenwelle mit einer Getriebewelle verbundene Welle, ist aus DE 36 39 586 A1 bekannt.

Als Flansch wird im Allgemeinen ein Ansatz an Bauelementen wie Rohre, Wellen oder Gehäusen bezeichnet, der dazu dient, das jeweilige Bauelement mit einem anderen Element zu verbinden oder zu verkuppeln. Charakteristisch am Flansch sind die Flanschblätter, die die Elemente an deren Verbindungsstelle kreisringförmig umringen und durch die der Flansch durch Anpressen miteinander verbunden wird. Die Verbindung kann irreversibel, z.B. durch Verschweißen der Flanschblätter, aber auch reversibel gestaltet sein, beispielsweise durch Verschrauben der Flanschblätter an dafür vorgesehene Bohrungen.

Beim Maschinenbau werden Flansche häufig zur Durchführung von Wellen verwendet, z.B. bei Planetengetrieben zwischen Getriebe und Welle. Eine Welle ist in ihrer einfachsten Form ein stabförmiges Maschinenelement, das zum Weiterleiten von Drehbewegungen und Drehmomenten sowie zur Lagerung von rotierenden Teilen Verwendung findet.

Hierbei übernimmt der Flansch neben der reinen Positionierung der Welle zum Getriebe auch die Aufgabe, die bei der Drehung der Welle übertragenen Torsionskräfte aufzunehmen.

Eingesetzt werden Planetengetriebe unter anderem bei Walzenpressen. Walzenpressen bestehen gewöhnlich aus zwei gleichgroßen, drehbar gelagerten Walzen, die sich jeweils gegenläufig mit gleicher Umlaufgeschwindigkeit drehen und zwischen denen das Mahlgut hindurchgepresst und zerkleinert wird. Der Antrieb der sehr schweren Walzen, welche 50 t oder mehr pro Stück betragen können, erfordert die Übertragung eines sehr großen Drehmoments, welches auf den Flansch übertragen wird. Die Flanschverbindung ist daher beim Betrieb der Walzen einer stetigen, erheblichen Belastung ausgesetzt. Damit der Flansch unter dieser Belastung nicht zerbricht oder sich verformt, ist der Flansch mehr oder weniger breit gestaltet, das heißt, er enthält relativ große Flanschblätter, die für eine ausreichend große Reibungsfläche zwischen den Flanschblättern sorgen, wodurch die Kraft auf eine entsprechend große Reibungsfläche verteilt wird. Der Flansch gewinnt dadurch an Stabilität. Ein großer Flansch hat allerdings auch zur Folge, dass der Durchmesser des Flansches deutlich größer ist als der Durchmesser der Welle. Dies hat wiederum den Nachteil, dass dann die auf der Welle angeordneten Maschinenelemente nicht mehr ohne weiteres an der Nabe entlang der Welle abgenommen werden können, da sie dann nicht mehr durch den breiteren Flansch hindurchpassen, was beispielsweise beim Auswechseln von Walzen oder der Wälzlager bei Walzenpressen ein großes Hindernis darstellt.

Üblicherweise wird dieses Problem dadurch gelöst, dass ein Abschnitt der Welle zwischen Welle und Flansch lösbar miteinander verbunden ist, so dass der Flansch von der Welle getrennt werden kann. Dies kann zum Beispiel durch Verwendung einer mechanischen oder hydraulischen Schrumpfscheibe erfolgen. Eine Schrumpfscheibe ist eine ebenfalls flanschförmige, kraftschlüssige Welle-Nabe-Verbindung, die von außen auf die Welle aufgebracht wird und die durch Verringerung ihres Innendurchmessers über kegelförmige Pressflächen der Außenteile Druck auf die Welle erzeugt, wodurch durch Presspassung eine reibschlüssige Verbindung zwischen Welle und Nabe erzeugt wird. Nachteilig an einer Schrumpfscheibe ist jedoch, dass zum Auswechseln der Walzen die Schrumpfscheibe jedes Mal demontiert und nach dem Auswechseln wieder anmontiert werden muss, was den Zeitaufwand beim Auswechseln erheblich vergrößert, besonders bei mechanischen Schrumpfscheiben.

Wünschenswert wäre daher, eine Lösung, mit der die an einer Welle befestigten Elemente ohne weitere Zwischenschritte schnell und unkompliziert abgenommen und ausgewechselt werden können.

Die Aufgabe wird gemäß Anspruch 1 gelöst durch eine wälzgelagerte Welle einer Hochdruckwalzenpresse, welche mindestens einen Flansch aufweist, der sich auf der Welle befindet, wobei die Welle mindestens zwei verschieden große Durchmesser aufweist und der Durchmesser des Flansches kleiner ist als der Durchmesser des Wälzlagersitzes. Weitere vorteilhafte Ausführungen finden sich in den Unteransprüchen.

Dadurch, dass die Welle unterschiedlich große Durchmesser hat, kann der Flansch nun erfindungsgemäß an einer schmaleren Stelle der Welle angebracht werden. Damit ist es möglich, den Durchmesser der Flanschverbindung trotz der Flanschblätter kleiner zu halten, als der breitere Durchmesser der Welle, auf der sich das Wälzlager befindet. Dies hat den Vorteil, dass das an der Nabe angebrachte Wälzlager, oder weitere Maschinenelemente, einfach durch Führen entlang der Welle abgenommen werden kann, ohne dass der Flansch die Herausnahme behindert. Das Wälzlager kann auf diese Weise relativ einfach und schnell ausgetauscht werden.

Da zur Abnahme des Wälzlagers der Flansch nicht entfernt werden muss, kann somit auf die Verwendung eines teuren hydraulischen oder mechanischen Schrumpfes verzichtet werden.

Ein weiterer Vorteil der erfindungsgemäßen Konstruktion ist es, dass zum Auswechseln der Elemente lediglich eine Kraftrichtung zur Bewegung der Elemente erforderlich ist. Gerade bei den sehr großen und schweren Walzen der Walzenpressen ist dies von großem Vorteil, da deren Bewegung einen großen Kraftaufwand erfordert und üblicherweise eine spezielle Hebevorrichtungen benötigt wird. Mit der erfindungsgemäßen Konstruktion wird das Element dagegen nur in axialer Richtung der Welle bewegt, was das Auswechseln erheblich erleichtert.

Üblicherweise hat die Welle einen kreisförmigen Querschnitt, grundsätzlich sind jedoch auch davon abweichende Querschnitte denkbar. Zum Beispiel kann der Querschnitt ovalförmig oder sternförmig sein. Der Durchmesser wird dann bestimmt als größtmögliche Entfernung von zwei sich auf dem Querschnitt befindlichen Punkten.

Da der Durchmesser des Flansches erfindungsgemäß nicht größer als der breiteste Bereich der Welle ist, dürfen die Flanschblätter auch nicht zu breit sein Ein verhältnismäßig kleiner Flansch resultiert aber entsprechend in einer kleineren Kontaktfläche der Flanschblätter. Folglich wird der Drehmoment beim Drehen der Welle auf eine kleinere Fläche des Flansches übertragen. In einer vorteilhaften Ausführungsform der Erfindung ist daher vorgesehen, zwischen dem Flansch ein oder mehrere Reibungsscheiben mit einer hohen Reibungszahl einzufügen. Die Reibungsscheiben sorgen für eine Vergrößerung der Haftreibung zwischen dem Flansch und bewirken somit eine größere Stabilität der Flanschverbindung. Dadurch können die Flansche im Durchmesser klein gehalten werden.

In einer weiteren vorteilhaften Ausgestaltung der Erfindung ist der Flansch auf der Welle angeschmiedet. Da die Abnahme nicht mehr erforderlich ist, ist die aufwendigere Schraubverbindung überflüssig. Zudem weißt ein verschweißter Flansch auch eine höhere mechanische Stabilität auf.

Die Welle kann auch mehr als zwei Durchmesser aufweisen. So kann der Durchmesser der Welle beispielsweise stufenweise in Richtung des Flansches abnehmen. Denkbar ist auch, dass sich die Welle konisch in axialer Richtung verjüngt.

Die Erfindung wird anhand der folgenden Figur näher erläutert.

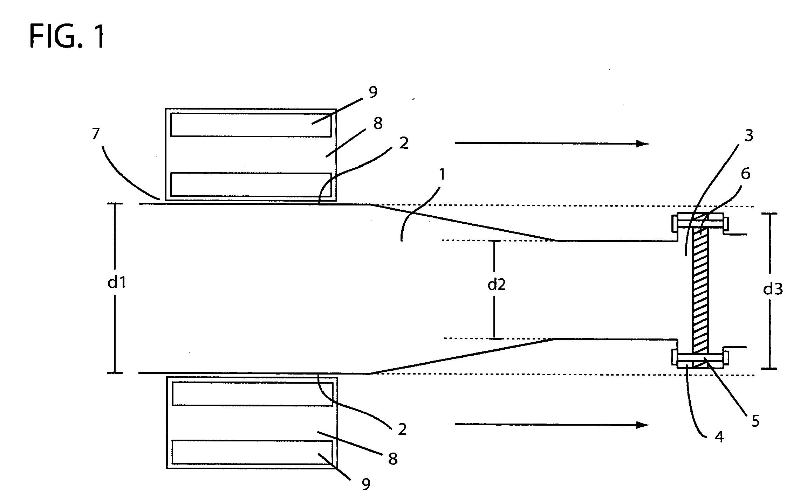

In Fig. 1 ist eine Welle 1 dargestellt, die an der Stelle des Wälzlagersitzes 2 einen Durchmesser d1 aufweist. Die Welle 1 verjüngt sich konisch in Richtung des Flansches 3 und weist im schmaleren Bereich einen Durchmesser d2 auf. Am schmaleren Ende der Welle 1 befindet sich der Flansch 3 mit den Flanschblättern 4 mit einem Durchmesser d3, der in diesem Beispiel an der Welle 1 angeschmiedet und somit eins mit der Welle ist. Der Flansch ist durch Schrauben 5 an den Flanschblättern 4 verbunden. Zur Übertragung des Drehmomentes ist zwischen dem Flansch eine Reibungsscheibe 6 angebracht, die dafür sorgt, dass die durch die Drehung verursachten Kräfte sich gleichmäßig an den Flanschblättern 4 verteilen. Auf dem breiteren Ende der Welle 1 ist an der Nabe 7 ein Wälzlager 8 mit den sich darin befindlichen Wälzkörpern 9 angebracht. Der Durchmesser d3 der Flanschverbindung 3 ist etwas kleiner als der Innendurchmesser d1, auf der sich das Wälzlager 8 befindet. Es ist somit möglich, nach Lösen der Flanschverbindung 3 durch Entfernen der Schrauben 5 das Wälzlager 8 an der Nabe 7 entlang der Pfeilrichtung an der Welle zu entfernen, ohne dass der Flansch dabei hinderlich ist.

### B EZUGSZEICHENLISTE

- 1: Welle
- 2: Wälzlagersitz
- 3: Flansch
- 4: Flanschblätter
- 5: Schraube
- 6: Reibungsscheibe
- 7: Nabe
- 8: Wälzlager
- 9: Wälzkörper
- d1,d2: Durchmesser der Welle
- d3: Durchmesser der Flanschverbindung

## Patentansprüche

1. Wälzgelagerte Welle (1) einer Hochdruckwalzenpresse, aufweisend mindestens einen Flansch (3), **dadurch gekennzeichnet, dass** die Welle (1) mindestens zwei verschieden große Durchmesser (d1, d2) aufweist und der Durchmesser (d3) des Flansches (3) kleiner ist als der Durchmesser des Wälzlagersitzes (2).

2. Welle (1) nach Anspruch 1, **dadurch gekennzeichnet, dass** der Flansch (3) an der Welle (1) angeschmiedet ist.

3. Welle nach einem der vorherlgen Ansprüche, **dadurch gekennzeichnet, dass** sich die Welle (1) teilweise konisch in axialer Richtung verjüngt.

4. Welle nach einem der vorherigen Ansprüche, **dadurch gekennzeichnet, dass** der Flansch durch Schrauben (5) oder durch Schweißen verbunden ist.

## Claims

1. Antifriction bearing mounted shaft (1) of a high pressure roll press, having at least one flange (3), **characterized in that** the shaft (1) has at least two diameters (d1, d2) of different size, and the diameter (d3) of the flange (3) is smaller than the diameter of the antifriction bearing seat (2).

2. Shaft (1) according to Claim 1, **characterized in that** the flange (3) is forged on the shaft (1).

3. Shaft according to one of the preceding claims, **characterized in that** the shaft (1) tapers partially conically in the axial direction.

4. Shaft according to one of the preceding claims, **characterized in that** the flange is connected by screws (5) or by welding.

## Revendications

1. Arbre (1) supporté sur palier à roulement pour une presse à rouleaux haute pression, présentant au moins une bride (3), **caractérisé en ce que** l'arbre (1) présente au moins deux diamètres de tailles différentes (d1, d2) et le diamètre (d3) de la bride (3) est inférieur au diamètre du siège du palier à roulement (2).

2. Arbre (1) selon la revendication 1, **caractérisé en ce que** la bride (3) est forgée sur l'arbre (1).

3. Arbre selon l'une quelconque des revendications précédentes, **caractérisé en ce que** l'arbre (1) se rétrécit en partie de manière conique dans la direction axiale.

4. Arbre selon l'une quelconque des revendications précédentes, **caractérisé en ce que** la bride est connectée par vissage (5) ou par soudage.
